(19) Europäisches Patentamt
European Patent Office
Office européen des brevets

(11) **EP 3 705 370 A1**

(12) **EUROPEAN PATENT APPLICATION**
published in accordance with Art. 153(4) EPC

(43) Date of publication:
**09.09.2020  Bulletin 2020/37**

(51) Int Cl.:
***B61L 23/00*** *(2006.01)*      ***G06T 7/00*** *(2017.01)*

(21) Application number: **18872317.5**

(22) Date of filing: **29.10.2018**

(86) International application number:
**PCT/JP2018/040108**

(87) International publication number:
**WO 2019/088021 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **01.11.2017  JP 2017212227**

(71) Applicants:
• **Kabushiki Kaisha Toshiba**
  **Minato-ku**
  **Tokyo 105-0023 (JP)**
• **Toshiba Infrastructure Systems & Solutions Corporation**
  **Kawasaki-shi, Kanagawa 212-0013 (JP)**

(72) Inventors:
• **FUTAGAMI, Takuya**
  **Tokyo 105-0023 (JP)**
• **TAKAHASHI, Yusuke**
  **Tokyo 105-0023 (JP)**
• **KOBAYASHI, Hiroyuki**
  **Tokyo 105-0023 (JP)**
• **KAMO, Yushi**
  **Kawasaki-shi**
  **Kanagawa 212-0013 (JP)**
• **TAKAHASHI, Isao**
  **Kawasaki-shi**
  **Kanagawa 212-0013 (JP)**
• **HATTORI, Yohei**
  **Kawasaki-shi**
  **Kanagawa 212-0013 (JP)**

(74) Representative: **Hoffmann Eitle**
**Patent- und Rechtsanwälte PartmbB**
**Arabellastraße 30**
**81925 München (DE)**

(54)  **TRAJECTORY DISCRIMINATION DEVICE**

(57)  A railway track detection device according to an embodiment includes an image acquisition unit, a feature selection unit, a feature data extraction unit, and a railway track detection unit. The image acquisition unit acquires a captured image captured by imaging a region in a traveling direction of a railway vehicle. The feature selection unit selects, for each of a plurality of pixel groups in the captured image based on a predetermined criteria, one feature from among a plurality of features that are similarity measurements of railway track, the one feature being used for detection of the railway track. The feature data extraction unit extracts, from each of the plurality of pixel groups, feature data based on the one feature selected by the feature selection unit. The railway track detection unit detects the railway track from the captured image based on an extraction result by the feature data extraction unit.

FIG.2

**Description**

FIELD

Embodiments of the present invention relate to a railway track detection device.

BACKGROUND

Conventionally, to inspect railway tracks or detect obstacles (objects to be monitored carefully) in the railway tracks when railway vehicle runs, various techniques have been studied to identify railway tracks (regions containing the railway tracks) from a captured image obtained by imaging a region in a traveling direction of the railway vehicle.

CITATION LIST

Patent Literature

Patent Literature 1: Japanese Patent Application Laid-open No. 2015-210388

SUMMARY OF THE INVENTION

Problem to be Solved by Invention

The above-mentioned conventional technique is required to increase the detection accuracy of the railway tracks from the captured image.

Means for Solving Problem

As for this embodiment, a railway track detection device includes an image capturing unit, a feature selection unit, a feature extraction unit, and a railway track extraction unit. The image capturing unit obtains an image captured by imaging a region in a traveling direction of a railway vehicle. The feature selection unit, for each groups of the pixels in the captured image, selects one feature, which can be metric of similarity of the railway track, from a plurality of features on the basis of a predetermined criteria. The feature extraction unit extracts, from each of the plurality of pixel groups, feature data based on the one feature selected by the feature selection unit. The railway track detection unit detects the railway track from the captured image based on a extraction result by the feature data extraction unit.

BRIEF DESCRIPTION OF DRAWINGS

FIG. 1 is an exemplary and schematic diagram illustrating a configuration of a vehicle system including a railway track detection device as a first embodiment.
FIG. 2 is an exemplary and schematic block diagram illustrating functions of the railway track detection device according to the first embodiment.
FIG. 3 is an exemplary and schematic diagram illustrating an example of captured images that can be acquired in the first embodiment.
FIG. 4 is an exemplary and schematic diagram illustrating another example of captured images that can be acquired in the first embodiment.
FIG. 5 is an exemplary and schematic diagram illustrating a bird's eye view image generated by converting the captured image illustrated in FIG. 3 in the first embodiment.
FIG. 6 is an exemplary and schematic diagram illustrating a bird's eye view image generated by converting the captured image illustrated in FIG. 4 in the first embodiment.
FIG. 7 is an exemplary and schematic diagram for explaining feature data based on luminance values that can be extracted in the first embodiment.
FIG. 8 is an exemplary and schematic diagram for explaining feature data based on a gradient of luminance values in an X direction that can be extracted in the first embodiment.
FIG. 9 is an exemplary and schematic diagram for explaining feature data based on a gradient of luminance values in a Y direction that can be extracted in the first embodiment.
FIG. 10 is an exemplary and schematic diagram for explaining the outline of a method for calculating an angle of (a part of) an already detected railway track that can be used in the first embodiment.

FIG. 11 is an exemplary and schematic diagram for explaining a method for detecting (a part of) a railway track from an area subsequent to an initial area that can be used in the first embodiment.

FIG. 12 is an exemplary and schematic diagram illustrating a captured image in which coordinate points constituting a railway track detected in the first embodiment are plotted.

FIG. 13 is an exemplary and schematic diagram illustrating an example of an image output to a display unit when it is determined that a remarkable object is present in a determination region in the first embodiment.

FIG. 14 is an exemplary and schematic flowchart illustrating a flow of processing executed by the railway track detection device according to the first embodiment.

FIG. 15 is an exemplary and schematic flowchart illustrating a flow of processing executed when the railway track detection device according to the first embodiment selects a feature in an initial area.

FIG. 16 is an exemplary and schematic flowchart illustrating a flow of processing executed when the railway track detection device according to the first embodiment selects a feature in the next area.

FIG. 17 is an exemplary and schematic block diagram illustrating functions of a railway track detection device according to a second embodiment.

FIG. 18 is an exemplary and schematic flowchart illustrating a flow of processing executed when the railway track detection device according to the second embodiment selects a feature in the next area.

FIG. 19 is an exemplary and schematic block diagram illustrating functions of a railway track detection device according to a third embodiment.

FIG. 20 is an exemplary and schematic flowchart illustrating a flow of processing executed when the railway track detection device according to the third embodiment selects a feature in an initial area.

FIG. 21 is an exemplary and schematic flowchart illustrating a flow of processing executed when the railway track detection device according to the third embodiment selects a feature in the next area.

DETAILED DESCRIPTION

Embodiments are described below with reference to the drawings. Configurations in the embodiments described below and actions and results (effects) obtained by the configurations are merely illustrative, and are not limited to the contents described below.

<First Embodiment>

First, a configuration in a first embodiment will be described.

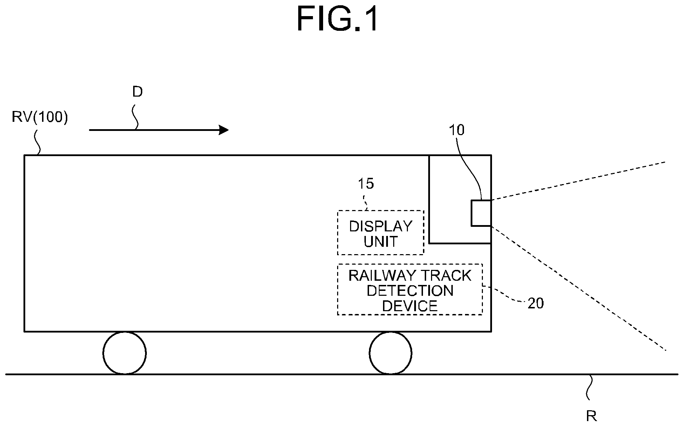

FIG. 1 is an exemplary and schematic diagram illustrating a configuration of a vehicle system 100 including a railway track detection device 20 according to the first embodiment. As illustrated in FIG. 1, the vehicle system 100 is installed in a railway vehicle RV running in a direction D on a railway track R constructed by a pair of rails.

Furthermore, as illustrated in FIG. 1, the vehicle system 100 includes a camera 10 as an imaging unit, a display unit 15, and a railway track detection device 20.

The camera 10 is provided at an end portion (for example, a driver's seat) of the railway vehicle RV, and images a region in a traveling direction of the railway vehicle RV. Captured images acquired by the camera 10 include the railway track R.

The display unit 15 is a device configured to display various kinds of images. The display unit 15 is provided at the driver's seat of the railway vehicle RV.

For example, the railway track detection device 20 is configured by a computer having hardware such as a processor and a memory.

By the way, for the purpose of inspection of the railway track R and detection of obstacles (objects to be monitored carefully) present on the railway track R during traveling of the railway vehicle RV, various technologies been studied for detecting the railway track R (a region including the railway track R) from a captured image acquired by imaging a region in a traveling direction of the railway vehicle RV have conventionally. In such technologies, it is desired to more accurately detect the railway track R from the captured images.

In view of the above, in the first embodiment, by providing the railway track detection device 20 with functions described below, the railway track R is more accurately detected from captured images.

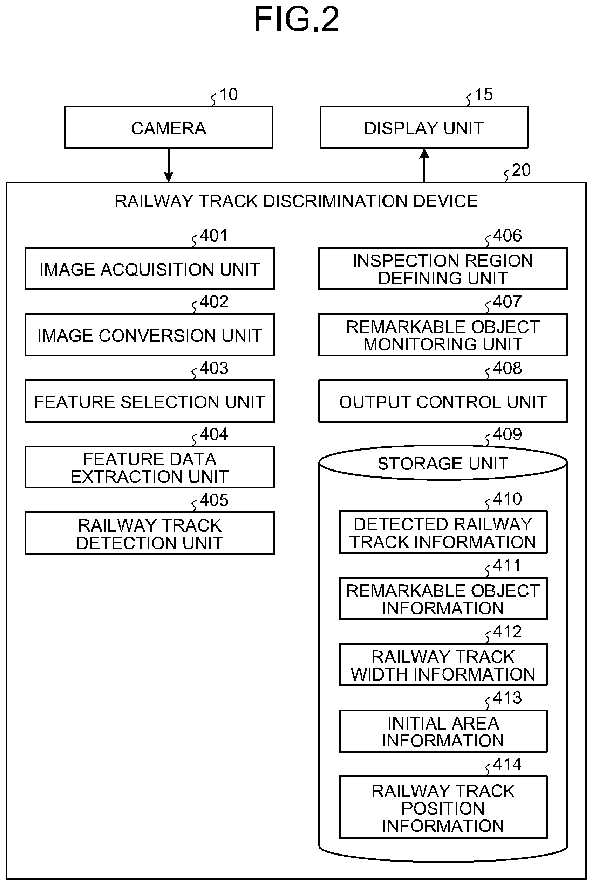

FIG. 2 is an exemplary and schematic block diagram illustrating functions of the railway track detection device 20 according to the first embodiment. As illustrated in FIG. 2, the railway track detection device 20 includes an image acquisition unit 401, an image conversion unit 402, a feature selection unit 403, a feature data extraction unit 404, a railway track detection unit 405, an inspection region defining unit 406, a remarkable object monitoring unit 407, an output control unit 408, and a storage unit 409.

Part or whole of a functional module group of the image acquisition unit 401, the image conversion unit 402, the feature selection unit 403, the feature data extraction unit 404, the railway track detection unit 405, the inspection region defining unit 406, the remarkable object monitoring unit 407, and the output control unit 408 are implemented by cooperation of hardware and software, more specifically, by the processor in the railway track detection device 20 reading and executing computer programs stored in the memory. Note that, in the first embodiment, a part or whole of the functional module group may be implemented by dedicated hardware (circuitry).

The storage unit 409 is implemented by various volatile or non-volatile storage media including the memory provided in the railway track determination device 20. The storage unit 409 stores the above-mentioned computer programs executed by the processor in the railway track determination device 20, and various kinds of information (detected railway track information 410, remarkable object information 411, railway track width information 412, initial area information 413, and railway track position information 414), described later, used for detecting the railway track R in accordance with the computer programs.

The image acquisition unit 401 acquires captured images captured by the camera 10. The captured images are, for example, color images. As exemplified below, the appearance of the railway track R in the captured image varies depending on imaging environments (for example, ambient brightness).

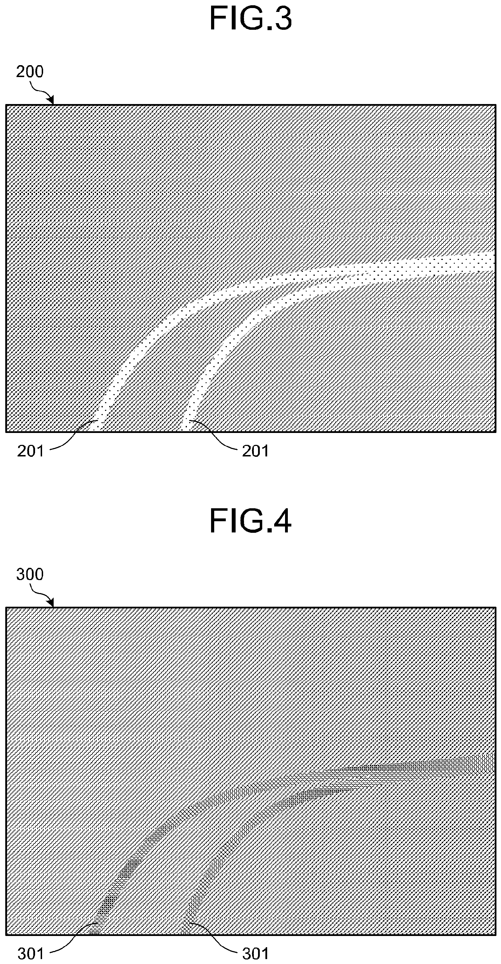

FIG. 3 is an exemplary and schematic diagram illustrating an example of captured images that can be acquired in the first embodiment. In an image 200 illustrated in FIG. 3, regions 201 corresponding to the railway track R are captured more brightly than peripheral regions. Such an image 200 can be acquired under imaging environments where the railway track R easily causes light reflection.

On the other hand, FIG. 4 is an exemplary and schematic diagram illustrating another example of captured images that can be acquired in the first embodiment. In an image 300 illustrated in FIG. 4, unlike the image 200 illustrated in FIG. 3, regions 301 corresponding to the railway track R are captured more darkly than peripheral regions. Such an image 300 can be acquired under imaging environments where the railway track R less easily reflects light.

Note that, while the railway track R curving on the far side (far side with respect to the camera 10) is captured in the captured images illustrated in FIG. 3 and FIG. 4, a captured image in which only a straight railway track R is captured can also be acquired in the first embodiment.

Referring back to FIG. 2, the image conversion unit 402 performs viewpoint transformation on a captured image acquired by the image acquisition unit 401 and thereby generates a bird's eye view image in which a region imaged by the camera 10 is looked down from the above. As exemplified below, in a bird's eye view image, the appearance of the width of a pair of rails constituting the railway track R is substantially the same between the near side and the far side with respect to the camera 10.

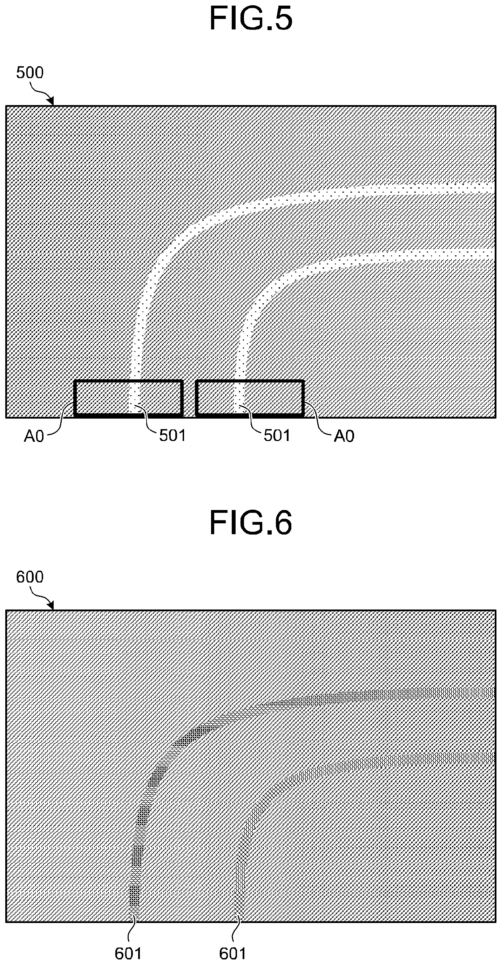

FIG. 5 is an exemplary and schematic diagram illustrating a bird's eye view image generated by converting the captured image illustrated in FIG. 3 in the first embodiment. In an image 500 illustrated in FIG. 5, similarly to the image 200 illustrated in FIG. 3, regions 501 corresponding to the railway track R are captured more brightly than peripheral regions. Note that, in the image 500 illustrated in FIG. 5, regions A0 are initial areas (details are described later) set in advance as regions each serving as a start point of detection of the railway track R (corresponding regions 501).

On the other hand, FIG. 6 is an exemplary and schematic diagram illustrating a bird's eye view image generated by converting the captured image illustrated in FIG. 4 in the first embodiment. In an image 600 illustrated in FIG. 6, similarly to the image 300 illustrated in FIG. 4, regions 601 corresponding to the railway track R are captured more darkly than peripheral regions.

In this manner, the appearance of the railway track R in the bird's eye view image varies depending on imaging environments similarly to that in the captured image before conversion. Thus, in order to detect the railway track R from the bird's eye view image by image processing, features as a similarity measurement of the railway tracks for the railway track R need to be appropriately selected depending on imaging environments.

For example, in imaging environments where the image 500 illustrated in FIG. 5 is acquired, a method for considering luminance values as features is effective. In the example illustrated in FIG. 5, the regions 501 corresponding to the railway track R are captured relatively more brightly than other regions. Thus, the regions 501 which correspond to the railway track R can be accurately detected when features are extracted by dividing (binarizing) the entire image 500 as a bird's eye view image into two regions: a region in which the luminance values are equal to or more than a threshold; and a region in which the luminance values are less than the threshold. This method is robust against noise because features to be considered is a single parameter, and is easily applicable to a railway track detection algorithm using an existing segment detection algorithm such as Hough transform or RANSAC, which is useful.

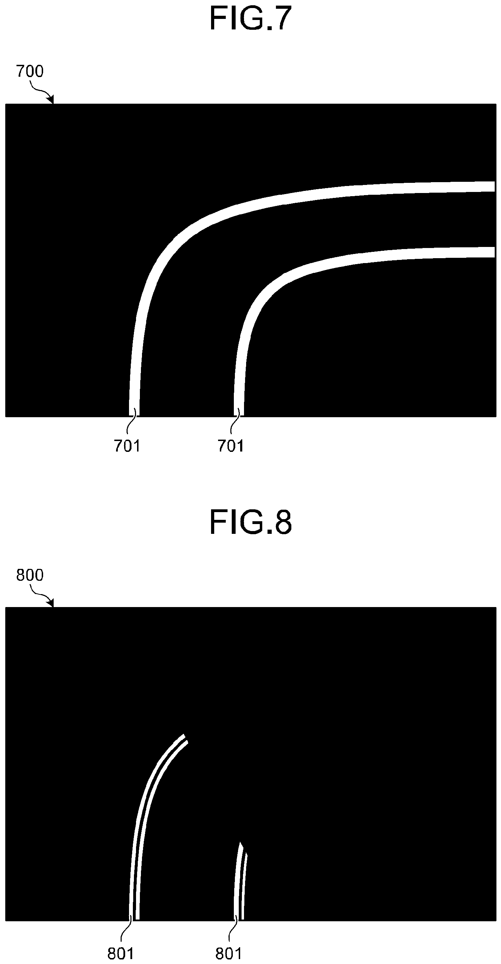

FIG. 7 is an exemplary and schematic diagram for explaining feature data based on luminance values that can be extracted in the first embodiment. An image 700 illustrated in FIG. 7 corresponds to features which are obtained by dividing (binarizing) the entire image 500 illustrated in FIG. 5 into two regions: a region in which the luminance values are equal to or more than a threshold; and a region in which the luminance values are less than the threshold. In the image 700 illustrated in FIG. 7, regions 701 corresponding to the entire railway track R are clearly indicated. Thus, the entire railway track R can be accurately detected from the image 700 illustrated in FIG. 7.

On the other hand, in imaging environments where the image 600 illustrated in FIG. 6 is acquired, a method for considering, as a feature, a gradient of luminance values (a difference in luminance value between two adjacent pixels) is effective. Note that the gradient of luminance values can be calculated by SOBEL filtering, Laplacian filtering, Robinson filtering, or Canny filtering.

In general, from a viewpoint of the camera 10, a railway track R extends from the near side toward the far side. Thus, a gradient of luminance values in the horizontal axis (x axis) direction is normally considered as a suitable feature. However, in the image 600 illustrated in FIG. 6, the regions 601 corresponding to the railway track R curves, from the viewpoint of the camera 10, in the middle from the near side toward the far side. Thus, in the image 600 illustrated in FIG. 6, in regions on the far side, the gradient of luminance values in the vertical axis (y axis) direction is larger than the gradient of luminance values in the horizontal axis direction.

Therefore, in the imaging environments where the image 600 illustrated in FIG. 6 is acquired, a method is effective, in which both of the gradient of luminance values in the horizontal axis direction and the gradient of luminance values in the vertical axis direction are considered as a feature and feature data is extracted while switching a gradient depending on an area (pixel group) to be detected. Although the number of elements to be considered as features increases and noise may increase, this method is useful since a curving railway track R can be appropriately detected in accordance with the direction in which the railway track R extends.

FIG. 8 is an exemplary and schematic diagram for explaining feature data based on a gradient of luminance values in the X direction that can be extracted in the first embodiment. An image 800 illustrated in FIG. 8 corresponds to feature data extracted by considering a gradient of luminance values in the horizontal axis direction and dividing (binarizing) the entire image 600 illustrated in FIG. 6 into two regions: a region in which the gradient is equal to or more than a threshold; and a region in which the gradient is less than the threshold. In the image 800 illustrated in FIG. 8, regions 801 corresponding to part of the railway track R on the near side of the image 600 illustrated in FIG. 6 (before curving) are clearly shown, but regions corresponding to part of the railway track R on the far side of the image 600 illustrated in FIG. 6 (after curving) are not shown at all. Thus, only the railway track R before curving can be accurately detected as shown by the image 800 illustrated in FIG. 8.

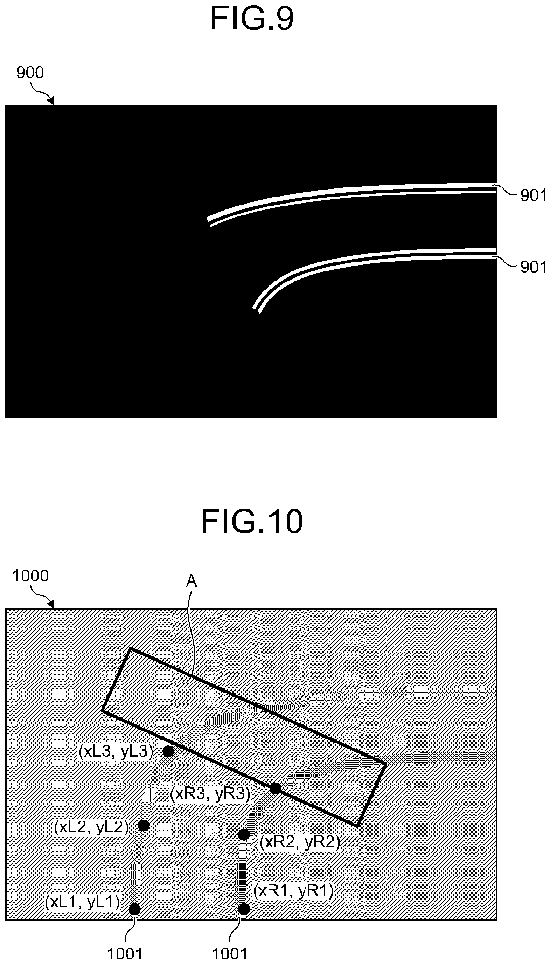

On the other hand, FIG. 9 is an exemplary and schematic diagram for explaining feature data based on a gradient of luminance values in the Y direction that can be extracted in the first embodiment. An image 900 illustrated in FIG. 9 corresponds to feature data extracted by considering a gradient of luminance values in the vertical axis direction and dividing (binarizing) the entire image 600 illustrated in FIG. 6 into two regions: a region in which the gradient is equal to or more than a threshold; and a region in which the gradient is less than the threshold. In the image 900 illustrated in FIG. 9, regions 901 corresponding to a part of the railway track R on the far side of the image 600 illustrated in FIG. 6 (after curving) are clearly shown, but regions corresponding to a part of the railway track R on the near side of the image 600 illustrated in FIG. 6 (before curving) are not shown at all. Thus, only the railway track R present on the far side of the curve can be accurately detected as shown by the image 900 illustrated in FIG. 9.

In this manner, features to be considered for accurately detecting the railway track R may vary depending on conditions, such as imaging environments of captured images (bird's eye view images) and a portion of the railway track R to be detected. Thus, in order to accurately detect the railway track R from any type of captured images (bird's eye view images), it is important to appropriately switch a feature used for detecting the railway track R depending on conditions.

Referring back to FIG. 2, the feature selection unit 403 selects, for each of a plurality of pixel groups (areas) in a bird's eye view image generated by the image conversion unit 402, one feature used for detecting the railway track R from a plurality of features as the similarity measurements of the railway track R, based on a predetermined criteria. Then, the feature data extraction unit 404 extracts, from each of the areas, feature data based on one feature selected by the feature selection unit 403. Then, the railway track detection unit 405 detects the railway track R from the captured image (bird's eye view image) based on the extraction result by the feature data extraction unit 404.

More specifically, in the first embodiment, the railway track detection unit 405 detects the railway track R from the entire captured image (bird's eye view image) by sequentially repeats the processing of detecting a part of the railway track R from an initial area (the region A0 in the example illustrated in FIG. 5) to be initially detected among the pixel groups (areas) and further detecting a part of the railway track R from the next area with reference to the detected part of the railway track R. Then, each time that the part of the railway track R is detected by the railway track detection unit 405, the feature selection unit 403 selects one feature corresponding to the next area by using, as the aforementioned predetermined criteria, at least information on a part of the railway track R already detected by the railway track detection unit 405.

In the first embodiment, the feature selection unit 403 selects one feature for the next area by using, as the above-mentioned predetermined criteria, an image statistic relating to brightness of a part of the railway track R already detected by the railway track detection unit 405 in a captured image (bird's eye view image). Examples of the image statistic relating to brightness include an average luminance value.

Considering an average luminance value of a part of the already detected railway track R, it can be determined whether a bird's eye view image to be processed is based on a captured image acquired in imaging environments where the railway track R more easily reflects light (see FIG. 3 and FIG. 5) or based on a captured image acquired in imaging environments where the railway track R less easily reflects light (see FIG. 4 and FIG. 6).

For example, when an average luminance value of a part of the already detected railway track R is equal to or more than a threshold value, it is considered that a region corresponding to the part of the railway track R is captured in the captured image (bird's eye view image) more brightly than other regions. In such a case, as described above, it is effective to consider the luminance values as a feature corresponding to the next area.

On the other hand, when the average luminance value of a part of the already detected railway track R is less than the threshold, it can be said that the region corresponding to the part of the railway track R is captured in the captured image (bird's eye view image) more darkly than other regions. In such a case, as described above, it is effective to consider a gradient of luminance values rather than the luminance values as a feature corresponding to the next area.

Therefore, in the first embodiment, the feature selection unit 403 determines whether to select the luminance values or select a gradient of the luminance values as a feature for the next area, depending on the magnitude relation between an average luminance value of a part of the already detected railway track R and a threshold.

By the way, as described above, there are two types of gradients of luminance values as features, that is, a gradient in the horizontal axis direction and a gradient in the vertical axis direction. The suitable gradient differs depending on the presence/absence of a curve.

As described below, the feature selection unit 403 determines, based on the angle of a part of the railway track R (direction in which part of railway track R extends) that has already been detected by the railway track detection unit 405, whether to select a gradient of luminance values in the horizontal axis direction or select a gradient of luminance values in the vertical axis direction as one feature used to detect a part of the railway track R from the next area.

FIG. 10 is an exemplary and schematic diagram for explaining the outline of a method for calculating an angle of (a part of) an already detected railway track R that can be used in the first embodiment. Here, in an image 1000 illustrated in FIG. 10, six coordinate points $(xL1,yL1)$, $(xR1,yR1)$, $(xL2,yL2)$, $(xR2,yR2)$, $(xL3,yL3)$, and $(xR3,yR3)$ as coordinate points constituting a part of the railway track R have already been detected. Information on those coordinate points is stored in the storage unit 409 as railway track position information 414.

In such conditions, the feature selection unit 403 calculates an angle of a part of the already detected railway track R based on Equation (1) below in order to select one feature corresponding to a region A to be detected next.

$$\text{Angle of part of already detected railway track R}$$
$$= \arctan((yL3 - yL2)/(xL3 - xL2)) \dots (1)$$

According to a calculation result of Equation (1) above, the presence/absence of a curve of the railway track R can be determined. In other words, when the calculation result of Equation (1) above is equal to or more than a threshold, it can be estimated that the railway track R has no curve and the railway track R also extends in the vertical axis direction in the region A to be detected next, and when the calculation result of Equation (1) above is less than the threshold, it can be estimated that the railway track R has a curve and the railway track R extends in the horizontal axis direction in the region A to be detected next. Note that, for example, the threshold is determined in advance in accordance with variation in aspect ratio after conversion from a captured image to a bird's eye view image.

Thus, the feature selection unit 403 selects a gradient of the luminance values in the horizontal axis direction as a feature when the calculation result of Equation (1) above is equal to or more than a threshold, and selects a gradient of the luminance values in the vertical axis direction as a feature when the calculation result of Equation (1) above is less than the threshold. In the example illustrated in FIG. 10, the six coordinate points that have been already detected correspond to the railway track R curving in front of the region A (see the region 1001), so that a gradient of the luminance values in the vertical axis direction is selected as a feature corresponding to the region A.

Note that, in the first embodiment, the angle of a part of the already detected railway track R may be calculated based on Equation (2) below in place of Equation (1) above.

$$\text{Direction in which already detected railway track}$$
$$R \text{ extends} = \arctan((yL3 - yL2)/(xL3 - xL2)) + \{\arctan$$
$$((yL3 - yL2)/(xL3 - xL2)) - \arctan((yL2 - yL1)/(xL2 -$$
$$xL1))\} \dots (2)$$

The number of parameters used for calculation in Equation (2) above is larger than that in Equation (1) above, so that Equation (2) can more accurately calculate the direction in which the already detected railway track R extends.

In the above, an example where only the direction in which the already detected railway track R extends is used as a predetermined criteria for selecting a feature corresponding to an area has been described. However, in the first embodiment, the position of an area to be detected in a captured image (bird's eye view image) may be used in place of (or in addition to) the direction in which the already detected railway track R extends.

For example, when it has been known in advance that the railway track R includes a curve, it has also been known in advance that the railway track R captured in a region on the far side in a captured image (bird's eye view image) extends in the horizontal axis direction. Thus, in such a case, the feature selection unit 403 may select one feature corresponding to each of the areas by using at least the position of each of a plurality of areas in the captured image (bird's eye view image) as the above-mentioned predetermined criteria.

In this manner, in the first embodiment, the method for detecting the entire railway track R by sequentially repeating the detection of a part of the railway track R from a partial area of the captured image (bird's eye view image) while selectively switching a plurality of features is employed. Then, the results in the course of the detection processing of the railway track R so far are taken into consideration for the selection of features.

By the way, the initial area is an area to be detected initially, so that there is no result in the course of the detection as described above. Thus, the detection result of the railway track R in the captured image (bird's eye view image) in the past (for example, one frame before) is used for detecting a part of the railway track R from the initial area.

In the first embodiment, the image acquisition unit 401 acquires captured images a plurality of times with the advance of the railway vehicle RV. Then, when selecting one feature corresponding to an initial area in the captured image (bird's eye view image) acquired at a given timing, the feature selection unit 403 uses, as a predetermined criteria for selecting the one feature, at least information (image statistic such as the average luminance value described above) on a part of the railway track R detected from the initial area in a bird's eye view image obtained at a timing before the given timing (bird's eye view image based on captured image of one frame before). Note that the information on the railway track R detected based on the captured image of one frame before is stored in the storage unit 409 as detected railway track information 410.

The method for detecting (a part of) the railway track R from each area in a captured image (bird's eye view image) will be more specifically described.

First, a method for detecting (a part of) a railway track R from an initial area will be described.

As described above, the initial area is set at a position determined in advance as a region serving as a start point for detecting the railway track R. The position of the initial area is stored in advance in the storage unit 409 as initial area information 413.

Thus, in the first embodiment, the railway track detection unit 405 extracts, with referring to the initial area information 413 in the storage unit 409, data in a region corresponding to the initial area from feature data extracted based on a feature selected by the above-mentioned method. Then, the railway track detection unit 405 executes the processing based on a segment detection algorithm, such as Hough transform or RANSAC, on the extracted data to extract candidates of (a part of) the railway track R present in the initial area.

By the way, the width of a pair of rails constituting a regular railway track R is determined in advance. Thus, by acquiring information on the width of the pair of rails constituting the regular railway track R, (a part of) the regular railway track R can be specified from the candidates extracted as described above. In the first embodiment, the width of the pair of rails constituting the railway track R is stored in advance in the storage unit 409 as railway track width information 412.

The railway track detection unit 405 specifies (detects) the regular railway track R by referring to the railway track width information 412 in the storage unit 409 and extracting, from the candidates extracted as described above, a candidate having the width matching the width indicated by the railway track width information 412. Then, the railway track detection unit 405 stores a plurality of coordinate points constituting the specified railway track R in the storage unit 409 as railway track position information 414. For example, in the example illustrated in FIG. 10, four coordinate points (xL1,yL1), (xR1,yR1), (xL2,yL2), and (xR2,yR2) are stored in the storage unit 409.

Next, a method for detecting (a part of) the railway track R from an area subsequent to the initial area will be described.

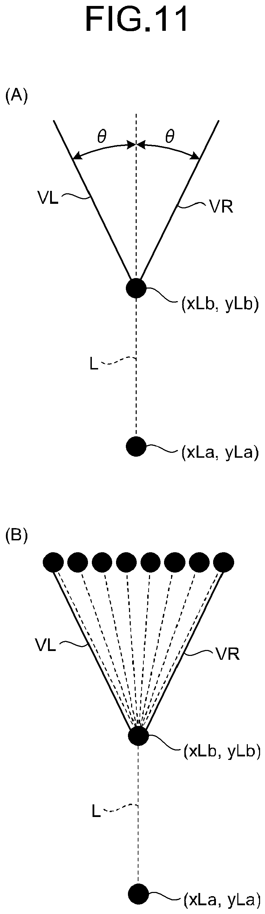

FIG. 11 is an exemplary and schematic diagram for explaining the outline of a method for detecting (a part of) the railway track R from an area subsequent to the initial area that can be used in the first embodiment. In the example illustrated in FIG. 11, two coordinate points (xLa,yLa) and (xLb,yLb) have already been detected as a part of the railway track R through the last processing.

In the first embodiment, as illustrated in FIG. 11(A), the railway track detection unit 405 first sets a predetermined fan-shaped region based on the last detected two coordinate points. The fan-shaped region is a region sectioned by virtual lines VR and VL that extend from the coordinate point (xLb,yLb) on the opposite side of the initial area out of the last detected two coordinate points (xLa,yLa) and (xLb,yLb) and that have, on the left and right sides of a straight line L, the same angle θ with respect to a straight line L connecting the two coordinate points. Note that the angle θ is an angle set in advance, and is, for example, an angle covering the range of the maximum curvature defined by standards of the railway track R. Furthermore, the lengths of the virtual lines VR and VL are lengths set in advance.

After setting the fan-shaped region as described above, the railway track detection unit 405 sets, as illustrated in FIG. 11(B), a plurality of segments comprehensively connecting a plurality of arbitrary points on the upper end of the fan-shaped region and the coordinate point (xLa,xLb) serving as a starting point of the fan-shaped region. In the first embodiment, these segments are the candidates of (a part of) the railway track R.

Then, the railway track detection unit 405 applies the candidates extracted in the manner described above onto the bird's eye view image, and specifies (detects), as (a part of) the regular railway track R, a candidate having the largest average value of features selected by the feature selection unit 403 among the candidates.

Note that the two coordinate points illustrated in FIG. 11 are present along one of the pair of rails constituting the railway track R. In an actual case, two coordinate points (not captured in FIG. 11) along the other rail have also been detected as well. Thus, the railway track detection unit 405 also specifies (detects) the regular railway track R by the same method as described above for the other rail.

In the first embodiment, the above-mentioned procedures are sequentially repeated to detect the entire railway track R from the entire captured image (bird's eye view image). Then, information on the detected (entire) railway track R is stored in the storage unit 409 as detected railway track information 410 in a format described below, for example.

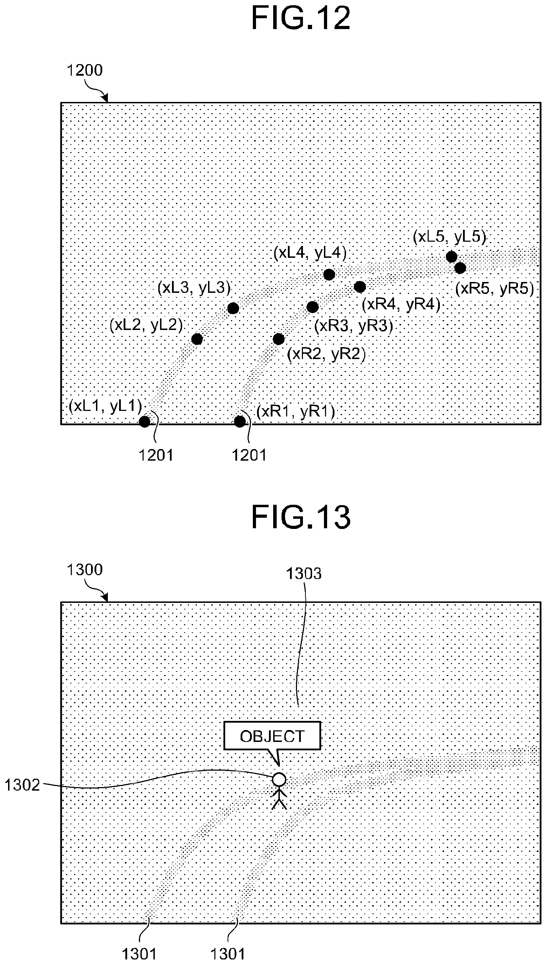

FIG. 12 is an exemplary and schematic diagram illustrating a captured image in which coordinate points constituting the railway track R detected in the first embodiment are plotted. In the first embodiment, an image 1200 illustrated in FIG. 12 is stored in the storage unit 409 as the detected railway track information 410. By appropriately connecting the coordinate points in the image 1200 illustrated in FIG. 12, regions 1201 corresponding to the railway track R are obtained.

Referring back to FIG. 2, the inspection region defining unit 406 specifies, based on the detection result by the railway track detection unit 405, a region near the railway track R in the captured image as a determination region that the presence/absence of an obstacle (objects to be monitored carefully) is to be determined.

Then, the remarkable object monitoring unit 407 monitors whether or not an object to be monitored carefully is present in the determination region specified by the inspection region defining unit 406. Information (template) for determining the presence/absence of the object to be monitored carefully is stored in the storage unit 409 as remarkable object information 411. The remarkable object monitoring unit 407 determines whether or not a pixel group matching the template of the object to be monitored carefully is present in the determination region, based on the remarkable object information 411 and the feature data extracted by the feature data extraction unit 404.

Then, when the remarkable object monitoring unit 407 determines that the object to be monitored carefully is present, the output control unit 408 outputs a warning by executing processing for outputting an image described below to the display unit 15.

FIG. 13 is an exemplary and schematic diagram illustrating an example of an image output to the display unit 15 when it is determined that an object to be monitored carefully is present in a determination region in the first embodiment. In an image 1300 illustrated in FIG. 13, a human being 1302 as the object to be monitored carefully is present near regions 1301 corresponding to the railway track R. Thus, in order to inform a driver in the railway vehicle RV that the human being 1302 as the object to be monitored carefully is present, the output control unit 408 outputs an index (icon, symbol) 1303 for attracting attention in the image 1300 in a superimposed manner.

Next, the operation in the embodiment will be described.

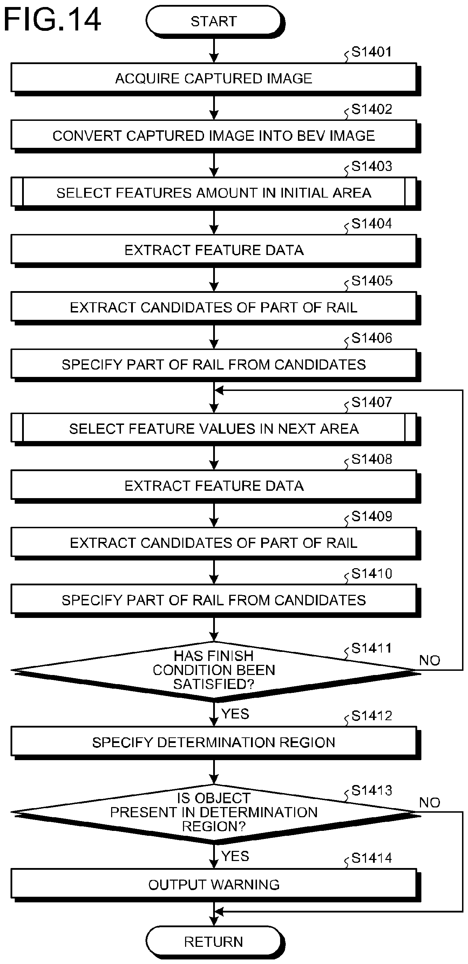

FIG. 14 is an exemplary and schematic flowchart illustrating a flow of processing executed by the railway track detection device 20 according to the first embodiment. The processing flow illustrated in FIG. 14 is repeatedly executed while the railway vehicle RV is traveling.

In the processing flow illustrated in FIG. 14, first, at S1401, the image acquisition unit 401 in the railway track detection device 20 acquires a captured image from the camera 10.

Then, at S1402, the image conversion unit 402 in the railway track detection device 20 converts the captured image acquired at S1401 into a bird's eye view image.

Then, at S1403, the feature selection unit 403 in the railway track detection device 20 selects features corresponding to an initial area by referring to the initial area information 413 or the like in the storage unit 409. The flow of processing executed at S1403 will be described in detail later, so a further description thereof is omitted here.

Then, at S1404, the feature data extraction unit 404 in the railway track detection device 20 extracts feature data from the bird's eye view image (a region corresponding to the initial area in the bird's eye view image) obtained at S1402, based on the features selected at S1403.

Then, at S1405, the railway track detection unit 405 in the railway track detection device 20 extracts candidates of a part of a railway track R based on the feature data extracted at S1404 by utilizing a segment detection algorithm such as Hough transform or RANSAC.

Then, at S1406, the railway track detection unit 405 specifies a part of the (regular) railway track R from the candidates extracted at S1405 by referring to the railway track width information 412 or the like in the storage unit 409.

Then, at S1407, the feature value selection unit 403 selects feature values in the next area. The flow of processing executed at S1407 will be described in detail later, so a further description thereof is omitted here.

Then, at S1408, the feature data extraction unit 404 extracts feature data based on the features selected at S1407 from the bird's eye view image (a region corresponding to the area to be currently processed in the bird's eye view image) obtained at S1402.

Then, at S1409, the railway track detection unit 405 extracts, based on the feature data extracted at S1408 or the like, candidates of a part of the railway track R by a method using the above-mentioned sectoral region (see FIG. 11) or the like.

Then, at S1410, the railway track detection unit 405 specifies a part of the (regular) railway track R from the candidates extracted at S1409 by a method using an average value of the above-mentioned features or the like.

Then, at S1411, the railway track detection unit 405 determines whether a finish condition for detecting the railway track R has been satisfied. Examples of the finish condition include a condition that the number of repetitions of the detection processing by the railway track detection unit 405 becomes a predetermined number or more and a condition that an end portion of (a part of) the railway track R detected by the railway track detection unit 405 last is located on the upper end side of a predetermined position in the bird's eye view image.

When it is determined at S1411 that the finish condition has not been satisfied, there is an undetected (part of the) railway track R. Thus, in this case, the processing returns to S1407, and the detection of (a part of) the railway track R is further repeated from the next area.

On the other hand, when it is determined at S1411 that the finish condition has been satisfied, there is no undetected (part of the) railway track R. Thus, in this case, all the detected railway tracks R are stored in the format such as that of the image 1200 illustrated in FIG. 12 described above, and then the processing proceeds to the next S1412.

At S1412, the inspection region defining unit 406 in the railway track detection device 20 specifies, based on the detection results of the railway track detection unit 405, a determination region near the railway track R, where the presence/absence of an obstacle (an object to be monitored carefully) is to be determined from the captured image.

Then, at S1413, the remarkable object monitoring unit 407 in the railway track detection device 20 determines whether or not an object to be monitored carefully is present in the determination region specified at S1402.

When it is determined at S1413 that an object to be monitored carefully is present, it is necessary to inform a driver in the railway vehicle RV that the object to be monitored carefully is present so as to attract attention. Thus, in this case, at S1414, the output control unit 408 in the railway track detection device 20 outputs a warning by executing processing for outputting the above-mentioned image 1300 illustrated in FIG. 13 to the display unit 15. Then, the processing is finished.

On the other hand, when it is determined at S1413 that no object to be monitored carefully is present, it is not necessary to attract attention. Thus, in this case, the output of warning at S1414 is not executed, and the processing is immediately finished.

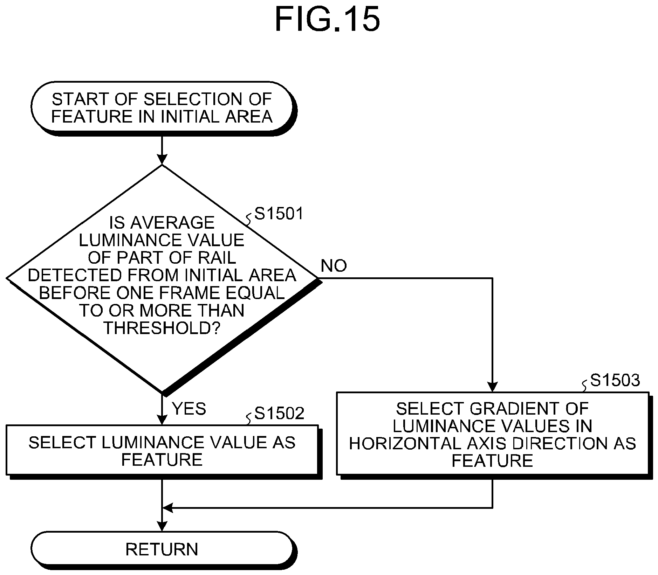

FIG. 15 is an exemplary and schematic flowchart illustrating a flow of processing executed when the railway track detection device 20 according to the first embodiment selects features in an initial area. The processing flow illustrated in FIG. 15 represents details of the flow of processing executed at S1403 in FIG. 14 described above.

In the processing flow illustrated in FIG. 15, at S1501, the feature selection unit 403 determines whether or not an average luminance value of (a region corresponding to) a part of a railway track R detected from an initial area of a bird's eye view image based on a captured image of one frame before is equal to or more than a threshold.

When it is determined at S1501 that the average luminance value is equal to or more than the threshold, it is effective to consider the luminance values as a feature, as described above. Thus, in this case, at S1502, the feature selection unit 403 selects the luminance values as a feature. Then, the processing is finished.

On the other hand, when it is determined at S1501 that the average luminance value is less than the threshold, it is effective to consider the gradient of the luminance values as a feature, as described above. Furthermore, in the initial area, the railway track R extends in the vertical axis direction in general. Thus, in this case, at S1503, the feature selection unit 403 selects, as a feature corresponding to the initial area, the gradient of the luminance values in the horizontal axis direction. Then, the processing is finished.

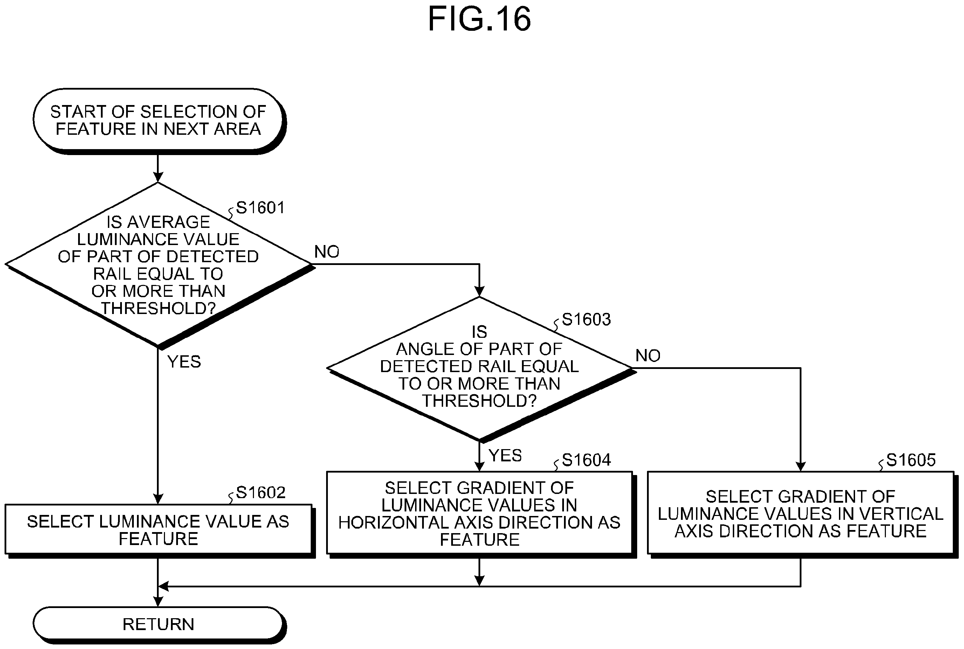

FIG. 16 is an exemplary and schematic flowchart illustrating a flow of processing executed when the railway track detection device 20 according to the first embodiment selects a feature in the next area. The processing flow illustrated in FIG. 16 represents details of the flow of processing executed at S1407 in FIG. 14 described above.

In the processing flow illustrated in FIG. 16, first, at S1601, the feature selection unit 403 determines whether an average luminance value of (a region corresponding to) a part of the already detected railway track R is equal to or more than a threshold.

When it is determined at S1601 that the average luminance value is equal to or more than the threshold, it is effective to focus on the luminance values as a feature, as described above. Thus, in this case, at S1602, the feature selection unit 403 selects the luminance values as a feature. Then, the processing is finished.

On the other hand, when it is determined at S1601 that the average luminance value is less than the threshold, it is effective to consider a gradient of the luminance values as a feature value, as described above. However, since an initial area is not an area from which the feature is to be selected in the processing flow illustrated in FIG. 16, a feature suitable for conditions needs to be selected in consideration of the presence/absence of a curve of the railway track R.

Thus, in this case, at S1603, the feature selection unit 403 determines whether or not an angle of a part of the already detected railway track R is equal to or more than a threshold. For calculating the angle, Equation (1) and Equation (2) described above can be used.

When it is determined at S1603 that the angle is equal to or more than the threshold, it can be determined that the railway track R extends in the vertical axis direction. Thus, in this case, at S1604, the feature selection unit 403 selects a gradient of the luminance values in the horizontal axis direction as a feature. Then, the processing is finished.

On the other hand, when it is determined at S1603 that the angle is less than the threshold, it can be determined that the railway track R has a curve and the railway track R extends in the horizontal axis direction. Thus, in this case, at S1605, the feature selection unit 403 selects a gradient of the luminance values in the vertical axis direction as a feature. Then, the processing is finished.

As described above, the railway track detection device 20 according to the first embodiment includes the image acquisition unit 401, the feature selection unit 403, the feature data extraction unit 404, and the railway track detection unit 405. The image acquisition unit 401 acquires a captured image captured by imaging a region in a traveling direction of the railway vehicle RV. The feature selection unit 403 selects, for each of a plurality of pixel groups (areas) in a captured image (bird's eye view image based on captured image), one feature used to detect the railway track R from among a plurality of features that are similarity measurements of the railway tracks R, based on a predetermined criteria. The feature data extraction unit 404 extracts, from each of the pixel groups, feature data based on one feature selected by the feature selection unit 403. The railway track detection unit 405 detects the railway track R from the captured image based on the extraction result by the feature data extraction unit. With this configuration, an appropriate feature is selected for each of pixel groups (areas) in a captured image (bird's eye view image based on captured image), and therefore the railway track can be more accurately detected from the captured image.

<Second Embodiment>

The above-described first embodiment exemplifies the configuration in which the presence/absence of a curve of the railway track R is determined by using the angle of a detected railway track R as a predetermined criteria, and a feature corresponding to the next area subsequent to the initial area is selected based on the determination result. Alternatively, as a second embodiment described below, another configuration is conceivable, in which the presence/absence of a curve of the railway track R is determined by directly detecting the traveling direction of the railway vehicle RV, and a feature corresponding to the next area subsequent to the initial area is selected based on the determination result.

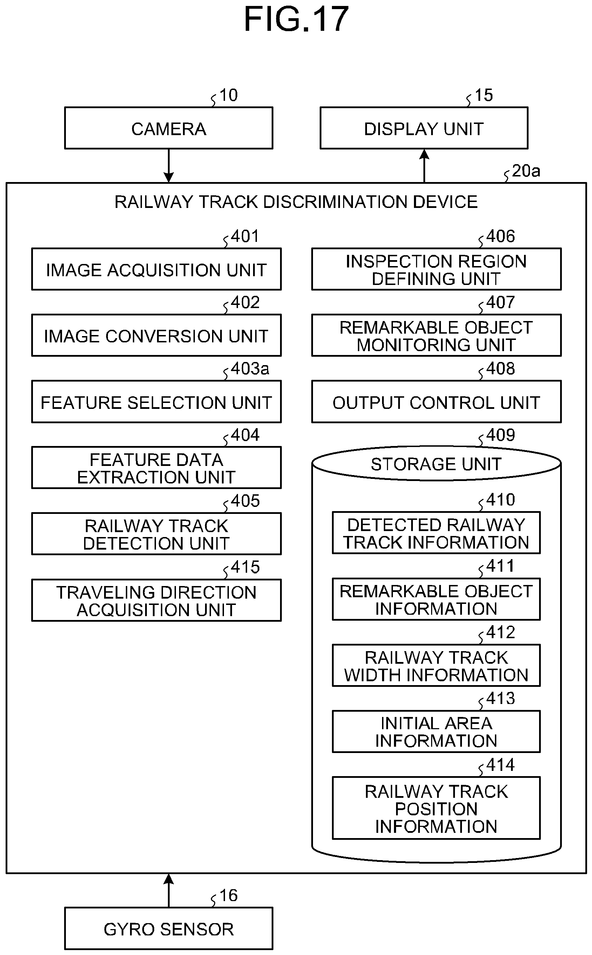

FIG. 17 is an exemplary and schematic block diagram illustrating functions of a railway track detection device 20a according to the second embodiment. Note that descriptions of parts common to the first embodiment and the second embodiment will be omitted below as appropriate.

As illustrated in FIG. 17, the railway track detection device 20a according to the second embodiment includes a traveling direction acquisition unit 415 which acquires a traveling direction of the railway vehicle RV based on an output value of a gyro sensor 16. The traveling direction acquisition unit 415 calculates the speed of the railway vehicle RV in the front-back, left-right, and up-down directions based on the output value of the gyro sensor 16, and determines the (rough) traveling direction of the railway vehicle RV based on the calculation result.

Then, a feature selection unit 403a in the railway track detection device 20a according to the second embodiment selects a feature corresponding to the next area subsequent to an initial area by using, as one of predetermined criteria, the traveling direction of the railway vehicle RV acquired by the traveling direction acquisition unit 415.

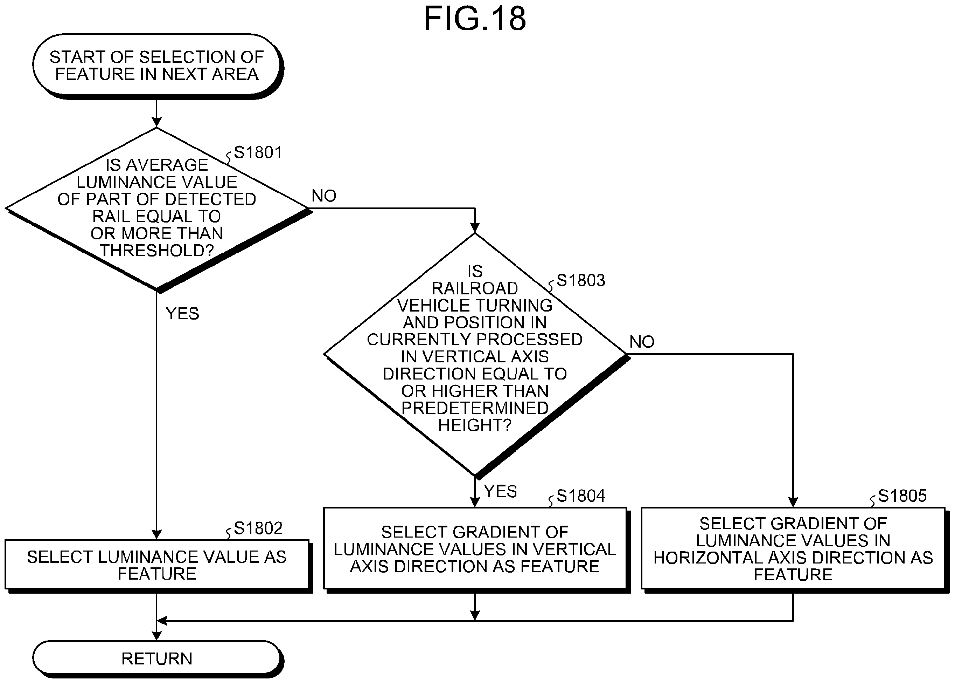

FIG. 18 is an exemplary and schematic flowchart illustrating a flow of processing executed when the railway track detection device 20a according to the second embodiment selects a feature in the next area. The processing flow illustrated in FIG. 18 is executed in place of the similar processing flow (see FIG. 16) executed in the first embodiment.

In the processing flow illustrated in FIG. 18, at S1801, the feature selection unit 403a in the railway track detection device 20a determines whether or not an average luminance value of (a region corresponding to) a part of the already detected railway track R is equal to or more than a threshold.

When it is determined at S1801 that the average luminance value is equal to or more than the threshold, it is effective to consider the luminance value as a feature, as described above. Thus, in this case, at S1802, the feature selection unit 403a selects the luminance values as a feature. Then, the processing is finished.

On the other hand, when it is determined at S1801 that the average luminance value is less than the threshold, it is effective to consider a gradient of the luminance values as a feature, as described above. However, an initial area is not an area from which the feature is to be selected in the processing flow illustrated in FIG. 18, so that a feature suitable for conditions needs to be selected in consideration of the presence/absence of a curve of the railway track R.

Thus, in this case, at S1803, the feature selection unit 403a determines whether or not the railway vehicle RV is turning and the position in a currently processed area in the vertical axis direction is at a position higher than a predetermined height. The former condition is evaluated based on the traveling direction of the railway vehicle RV acquired by the traveling direction acquisition unit 415, and the latter condition is evaluated based on the railway track position information 414 or the like stored in the storage unit 409.

When it is determined at S1803 that the above-mentioned two conditions are simultaneously satisfied, it can be determined that the railway track R has a curve and (a part of) the railway track R captured in the area to be processed extends in the horizontal axis direction. Thus, in this case, at S1804, the feature selection unit 403a selects, as a feature, a gradient of the luminance values in the vertical axis direction. Then, the processing is finished.

On the other hand, when it is determined at S1803 that at least one of the above-mentioned two conditions is not satisfied, it can be determined that (a part of) the railway track R captured in the area to be processed extends in the vertical axis direction. Thus, in this case, at S1805, the feature selection unit 403a selects a gradient of the luminance values in the horizontal axis direction as a feature. Then, the processing is finished.

Note that the other configurations and operations in the second embodiment are the same as in the first embodiment.

As described above, the railway track detection device 20a according to the second embodiment include the traveling direction acquisition unit 415 to acquire the traveling direction of the railway vehicle RV, in addition to the same configurations as in the first embodiment. Then, the feature selection unit 403a according to the second embodiment selects one feature corresponding to each area to be detected subsequently to the initial area by using, as a predetermined criteria, the traveling direction acquired by the traveling direction acquisition unit 415. With this configuration, since the presence/absence of a curve of the railway track R can be easily determined based on the traveling direction acquired by the traveling direction acquisition unit 415, the railway track R can be more accurately detected from a captured image (bird's eye view image) by using an appropriate feature depending on the presence/absence of a curve.

In addition, in the second embodiment, a receiver for a global navigation satellite system (GNSS) may be used in place of the gyro sensor 16 as the configuration for detecting the traveling direction of the railway vehicle RV. With this configuration, the traveling direction of the railway vehicle RV can be determined by, at a predetermined interval, repeatedly acquiring position information on the latitude and longitude obtained by the GNESS and then taking a difference between the currently acquired position information and the previously acquired position information.

<Third Embodiment>

The above-described first embodiment exemplified the configuration for determining whether to select luminance values as a feature or select a gradient of luminance values as a feature by using, as a predetermined criteria, an image statistic (such as average luminance value) relating to brightness of a region corresponding to the railway track R in a captured image (bird's eye view image). Alternatively, as a third embodiment described below, another configuration is conceivable, in which a feature is selected in consideration of the current position of the railway vehicle RV in addition to the image statistic.

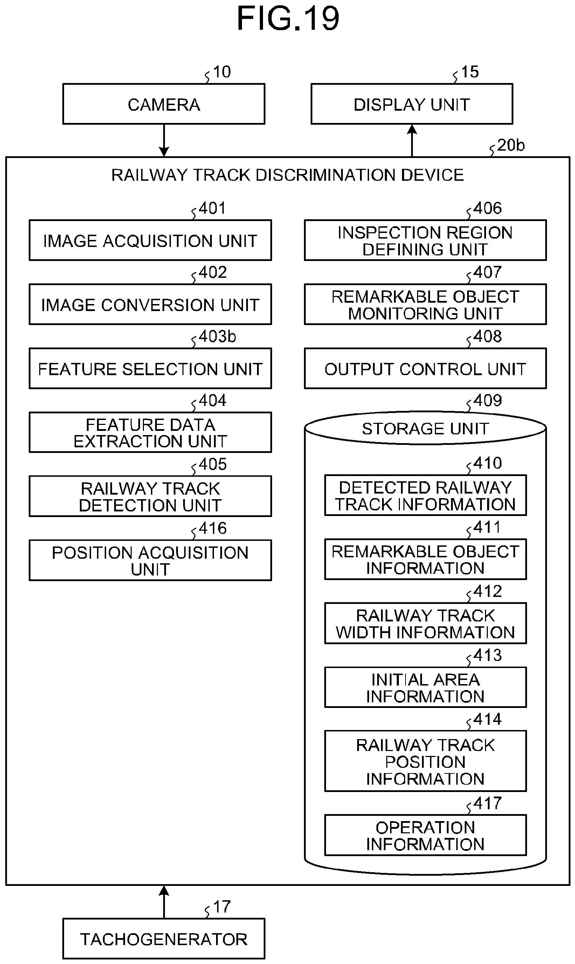

FIG. 19 is an exemplary and schematic block diagram illustrating a configuration of a railway track detection device 20b according to the third embodiment. Note that descriptions of parts common to the first embodiment and the third embodiment will be omitted below as appropriate.

As illustrated in FIG. 19, the railway track detection device 20b according to the third embodiment includes a positioning unit 416 to acquire a current position of the railway vehicle RV based on an output value of a tachogenerator 17 that is provided to an axle or the like of the railway vehicle RV. The position acquisition unit 416 calculates a traveling distance of the railway vehicle RV based on the output value of the tachogenerator 17, and estimates (acquires) the current position of the railway vehicle RV based on the calculation result and operation information 417 stored in the storage unit 409.

The estimation result of the current position by the position acquisition unit 416 can be used for determining whether or not the railway vehicle RV is traveling through a tunnel. Whether the railway vehicle RV is running in a tunnel relates to whether the surrounding of the railway vehicle RV is dark, and thus relates to imaging environments of captured images. As described above, the appearance of the railway track R in a captured image changes depending on imaging environments. Therefore, it is useful to take the estimation result of the current position by the position acquisition unit 416 into consideration as one predetermined criteria used for selection of a feature for detecting the railway track R.

For example, when the current position of the railway vehicle RV corresponds to a location other than a tunnel, the surrounding of the railway vehicle RV is estimated to be relatively bright. Thus, it is considered that a region corresponding to the railway track R is captured more brightly than other regions in a captured image (bird's eye view image) acquired in this condition. Thus, in such a case, as described above, it is effective to consider luminance values as a feature.

On the other hand, when the current position of the railway vehicle RV corresponds to a location within a tunnel, the surrounding of the railway vehicle RV is estimated to be relatively dark. Thus, it is considered that a region corresponding to the railway track R is captured more darkly than other regions in a captured image (bird's eye view image) acquired in this condition. Thus, in such a case, as described above, it is effective to consider a gradient of luminance values as a feature. Note that the method for determining which of the vertical axis direction or the horizontal axis direction is considered as a direction of a gradient of luminance values is the same as, for example, that in the first embodiment.

In this manner, a feature selection unit 403b in the railway track detection device 20b according to the third embodiment selects a feature by using, as one of predetermined criteria, the current position of the railway vehicle RV acquired by the position acquisition unit 416.

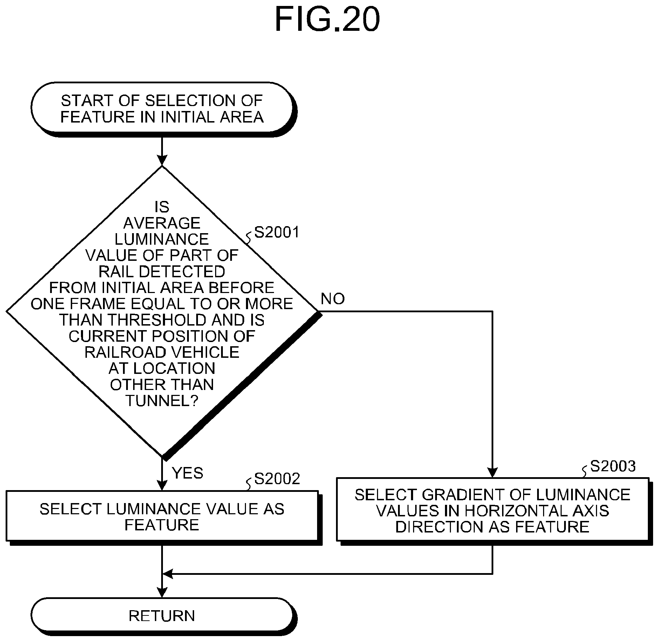

FIG. 20 is an exemplary and schematic flowchart illustrating a flow of processing executed when the railway track detection device 20b according to the third embodiment selects a feature in an initial area. The processing flow illustrated in FIG. 20 is executed in place of the similar processing flow (see FIG. 15) executed in the first embodiment.

In the processing flow illustrated in FIG. 20, first, at S2001, the feature selection unit 403b in the railway track detection device 20b determines whether or not an average luminance value of a part of the railway track R (corresponding region) detected from the initial area in a bird's eye view image based on a captured image of one frame before is equal to or more than a threshold and whether or not the current position of the railway vehicle RV corresponds to a location other than a tunnel.

When it is determined at S2001 that both of the above-mentioned two conditions are satisfied, it is effective to consider the luminance values as a feature, as described above. Thus, in this case, at S2002, the feature selection unit 403b selects the luminance values as a feature. Then, the processing is finished.

On the other hand, when it is determined at S2001 that at least one of the above-mentioned two conditions is not satisfied, as described above, it is effective to consider a gradient of the luminance values as a feature. Furthermore, in the initial area, the railway track R extends in the vertical axis direction in general. Thus, in this case, at S2003, the feature selection unit 403b selects a gradient of the luminance values in the horizontal axis direction as a feature corresponding to the initial area. Then, the processing is finished.

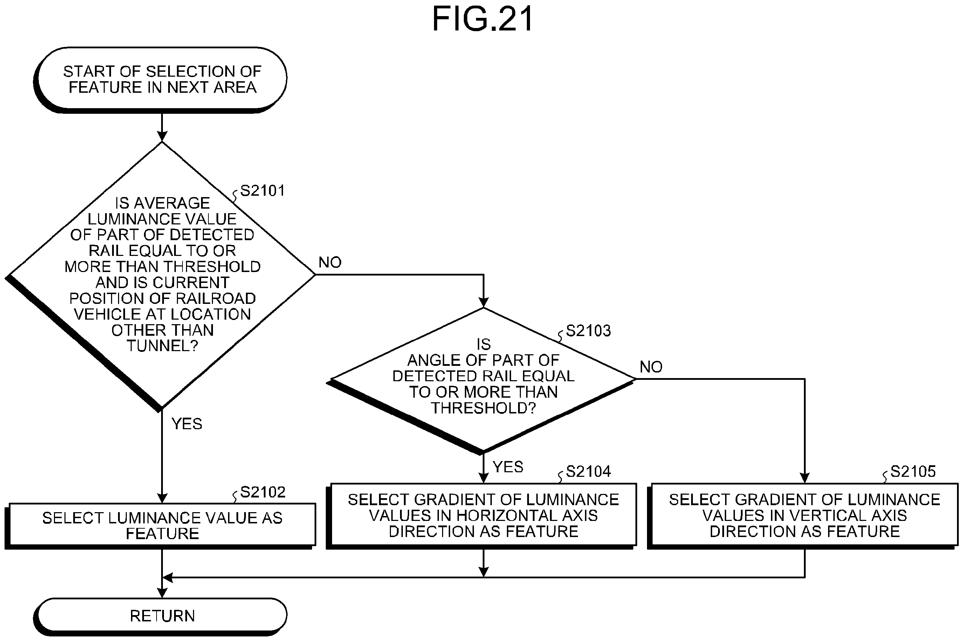

FIG. 21 is an exemplary and schematic flowchart illustrating a flow of processing executed when the railway track detection device 20b according to the third embodiment selects a feature in the next area. The processing flow illustrated in FIG. 21 is executed in place of the similar processing flow (see FIG. 16) executed in the first embodiment.

In the processing flow illustrated in FIG. 21, first, at S2101, the feature selection unit 403b in the railway track detection device 20b determines whether or not an average luminance value of a part of the already detected railway track R (corresponding region) is equal to or more than a threshold and whether or not the current position of the railway vehicle RV corresponds to a location other than a tunnel.

When it is determined at S2101 that both of the above-mentioned two conditions are satisfied, it is effective to consider the luminance values as a feature, as described above. Thus, in this case, at S2102, the feature selection unit 403b selects the luminance values as a feature. Then, the processing is finished.

On the other hand, when it is determined at S2101 that at least one of the above-mentioned two conditions is not satisfied, it is effective to consider a gradient of the luminance values as a feature, as described above. However, an initial area is not an area from which a feature is to be selected in the processing flow illustrated in FIG. 21. Thus, a feature suitable for conditions needs to be selected in consideration of the presence/absence of a curve of the railway track R.

In this case, at S2103, the feature selection unit 403b determines whether or not the angle of a part of the already detected railway track R is equal to or more than a threshold. Equation (1) and Equation (2) described above can be used for calculating the angle.

When it is determined at S2103 that the angle is equal to or more than a threshold, it can be determined that the railway track R extends in the vertical axis direction. Thus, in this case, at S2104, the feature selection unit 403b selects a gradient of the luminance values in the horizontal axis direction as a feature. Then, the processing is finished.

On the other hand, when it is determined at S2103 that the angle is less than the threshold, it can be determined that the railway track R has a curve and the railway track R extends in the horizontal axis direction. Thus, in this case, at S2105, the feature selection unit 403b selects a gradient of the luminance values in the vertical axis direction as a feature. Then, the processing is finished.

Note that the other configurations and operations in the third embodiment are the same as those in the first embodiment.

As described above, the railway track discrimination device 20b according to the third embodiment includes the position acquisition unit 416 to acquire the current position of the railway vehicle RV, in addition to the same configurations as in the first embodiment. Then, the feature selection unit 403b according to the third embodiment selects one feature corresponding to each area by using the current position acquired by the position acquisition unit 416 as one predetermined criteria. With this configuration, since imaging environments in which the captured image (bird's eye view image) was obtained can be estimated based on the current position acquired by the position acquisition unit 416, the railway track R can be more accurately detected from a captured image (bird's eye view image) by using an appropriate feature corresponding to imaging environments.

Note that the technology in the third embodiment described above enables predicting a branch of the railway track R by using the current position of the railway vehicle RV. Specifically, the feature selection unit 403b according to the third embodiment can determine whether or not the railway vehicle RV will branch in the future based on the current position acquired by the position acquisition unit 416 and the operation information 417 stored in the storage unit 409, and select an appropriate feature corresponding to a traveling direction of the railway vehicle RV beyond the branch based on the determination result.

Furthermore, the above-mentioned third embodiment exemplifies the configuration in which the current position of the railway vehicle RV is acquired (estimated) based on the output value of the tachogenerator 17. Alternatively, the current position of the railway vehicle RV can also be estimated by means other than the tachogenerator 17. For example, the current position of the railway vehicle RV may be estimated based on position information on the latitude and longitude obtained by the GNSS.

While some embodiments of the present invention have been described above, the above-mentioned embodiments and modifications are merely illustrative, and are not intended to limit the scope of the invention. The above-mentioned embodiments can be carried out in various forms, and can be variously omitted, replaced, and changed within the range not departing from the gist of the invention. The above-mentioned embodiments and modifications are included in the scope and the gist of the invention, and included in the invention recited in the claims and its equivalents.

**Claims**

1. A railway track detection device comprising:

   an image acquisition unit configured to acquire a captured image captured by imaging a region in a traveling direction of a railway vehicle;
   a feature selection unit configured to select, for each of a plurality of pixel groups in the captured image based on a predetermined criteria, one feature from among a plurality of features that are similarity measurement of railway track, the one feature being used for detection of the railway track;
   a feature data extraction unit configured to extract, from each of the plurality of pixel groups, feature data based on the one feature selected by the feature selection unit; and
   a railway track detection unit configured to detect the railway track from the captured image based on a extraction result by the feature data extraction unit.

2. The railway track detection device according to claim 1, wherein
   the railway track detection unit is configured to detect the railway track from the entire captured image by sequentially repeats processing of detecting a part of the railway track from an initial area to be initially detected among the pixel groups and further detecting a part of the railway track from a next pixel group with reference to the detected part of the railway track, and,
   each time that the part of the railway track is detected by the railway track detection unit, the feature selection unit is configured to select the one feature corresponding to the next pixel group by using, as the predetermined criteria, at least information on the part of the railway track already detected by the railway track detection unit.

3. The railway track detection device according to claim 2, wherein
   the image acquisition unit is configured to acquire the captured images a plurality of times with an advance of the railway vehicle, and,
   when the one feature corresponding to the initial area among the pixel groups in the captured image obtained at a given timing is selected, the feature selection unit is configured to use, as the predetermined criteria, at least information on the part of the railway track detected from the initial area in the captured image obtained at a timing before the given timing.

4. The railway track detection device according to claim 2 or 3, wherein the feature selection unit is configured to use, as the information on the part of the railway track already detected by the railway track detection unit, an image statistic relating to brightness of the part of the railway track already detected by the railway track detection unit in the captured image.

5. The railway track detection device according to any one of claims 1 to 4, wherein the feature selection unit is configured to select the one feature corresponding to each of the pixel groups by using, as the predetermined criteria, at least a position of each of the pixel groups in the captured image.

6. The railway track detection device according to any one of claims 1 to 5, further comprising a traveling direction acquisition unit configured to acquire a traveling direction of the railway vehicle, wherein
the feature selection unit is configured to select the one feature by using, as the predetermined criteria, at least the traveling direction acquired by the traveling direction acquisition unit.

7. The railway track detection device according to any one of claims 1 to 6, further comprising a position acquisition unit configured to acquire a current position of the railway vehicle, wherein
the feature selection unit is configured to select the one feature by using, as the predetermined criteria, at least the current position acquired by the position acquisition unit.

# FIG.1

RV(100)

D

10

15

DISPLAY
UNIT

RAILWAY TRACK
DETECTION
DEVICE

20

R

# FIG.2

CAMERA ⌐10

DISPLAY UNIT ⌐15

⌐20

## RAILWAY TRACK DISCRIMINATION DEVICE

| | |
|---|---|
| ⌐401 IMAGE ACQUISITION UNIT | ⌐406 INSPECTION REGION DEFINING UNIT |
| ⌐402 IMAGE CONVERSION UNIT | ⌐407 REMARKABLE OBJECT MONITORING UNIT |
| ⌐403 FEATURE SELECTION UNIT | ⌐408 OUTPUT CONTROL UNIT |
| ⌐404 FEATURE DATA EXTRACTION UNIT | ⌐409 STORAGE UNIT |
| ⌐405 RAILWAY TRACK DETECTION UNIT | ⌐410 DETECTED RAILWAY TRACK INFORMATION |
| | ⌐411 REMARKABLE OBJECT INFORMATION |
| | ⌐412 RAILWAY TRACK WIDTH INFORMATION |
| | ⌐413 INITIAL AREA INFORMATION |
| | ⌐414 RAILWAY TRACK POSITION INFORMATION |

# FIG.3

200

201 — 201

# FIG.4

300

301 — 301

# FIG.5

500

A0    501    501    A0

# FIG.6

600

601    601

# FIG.7

700

701     701

# FIG.8

800

801     801

# FIG.9

900

901

901

# FIG.10

1000

A

(xL3, yL3)

(xR3, yR3)

(xL2, yL2)

(xR2, yR2)

(xR1, yR1)

(xL1, yL1)

1001

1001

# FIG.11

(A)

(B)

# FIG.12

1200

(xL5, yL5)

(xL4, yL4)

(xL3, yL3)

(xR5, yR5)

(xL2, yL2)

(xR4, yR4)

(xR3, yR3)

(xR2, yR2)

(xL1, yL1)        (xR1, yR1)

1201        1201

# FIG.13

1300                    1303

OBJECT

1302

1301        1301

# FIG.14

```
        ┌─────────────────┐
        │      START      │
        └─────────────────┘
                 │
                 ▼                              S1401
┌────────────────────────────────────────────┐
│           ACQUIRE CAPTURED IMAGE            │
└────────────────────────────────────────────┘
                 │
                 ▼                              S1402
┌────────────────────────────────────────────┐
│      CONVERT CAPTURED IMAGE INTO BEV IMAGE  │
└────────────────────────────────────────────┘
                 │
                 ▼                              S1403
┌────────────────────────────────────────────┐
│      SELECT FEATURES AMOUNT IN INITIAL AREA │
└────────────────────────────────────────────┘
                 │
                 ▼                              S1404
┌────────────────────────────────────────────┐
│             EXTRACT FEATURE DATA            │
└────────────────────────────────────────────┘
                 │
                 ▼                              S1405
┌────────────────────────────────────────────┐
│       EXTRACT CANDIDATES OF PART OF RAIL    │
└────────────────────────────────────────────┘
                 │
                 ▼                              S1406
┌────────────────────────────────────────────┐
│      SPECIFY PART OF RAIL FROM CANDIDATES   │
└────────────────────────────────────────────┘
                 │
                 ▼◄───────────────────────────────┐
                                   S1407           │
┌────────────────────────────────────────────┐    │
│       SELECT FEATURE VALUES IN NEXT AREA    │    │
└────────────────────────────────────────────┘    │
                 │                                 │
                 ▼                     S1408        │
┌────────────────────────────────────────────┐    │
│             EXTRACT FEATURE DATA            │    │
└────────────────────────────────────────────┘    │
                 │                                 │
                 ▼                     S1409        │
┌────────────────────────────────────────────┐    │
│       EXTRACT CANDIDATES OF PART OF RAIL    │    │
└────────────────────────────────────────────┘    │
                 │                                 │
                 ▼                     S1410        │
┌────────────────────────────────────────────┐    │
│      SPECIFY PART OF RAIL FROM CANDIDATES   │    │
└────────────────────────────────────────────┘    │
                 │                                 │
                 ▼              S1411          NO  │
            ╱ HAS FINISH ╲ ──────────────────────┘
           ╱  CONDITION BEEN ╲
           ╲   SATISFIED?  ╱
            ╲           ╱
                 │ YES               S1412
                 ▼
┌────────────────────────────────────────────┐
│        SPECIFY DETERMINATION REGION         │
└────────────────────────────────────────────┘
                 │
                 ▼              S1413          NO
            ╱   IS OBJECT   ╲ ──────────────────┐
           ╱ PRESENT IN DETERMINATION ╲          │
           ╲     REGION?   ╱                     │
                 │ YES               S1414        │
                 ▼                               │
┌────────────────────────────────────────────┐  │
│              OUTPUT WARNING                 │  │
└────────────────────────────────────────────┘  │
                 │◄──────────────────────────────┘
                 ▼
        ┌─────────────────┐
        │     RETURN      │
        └─────────────────┘
```

# FIG.15

START OF SELECTION OF
FEATURE IN INITIAL AREA

S1501

IS AVERAGE
LUMINANCE VALUE
OF PART OF RAIL
DETECTED FROM INITIAL AREA
BEFORE ONE FRAME EQUAL
TO OR MORE THAN
THRESHOLD?

NO

S1503

SELECT GRADIENT OF
LUMINANCE VALUES IN
HORIZONTAL AXIS DIRECTION AS
FEATURE

YES

S1502

SELECT LUMINANCE VALUE AS
FEATURE

RETURN

# FIG.16

START OF SELECTION OF
FEATURE IN NEXT AREA

S1601
IS AVERAGE
LUMINANCE VALUE
OF PART OF DETECTED
RAIL EQUAL TO
OR MORE THAN
THRESHOLD?

NO

YES

S1603
IS
ANGLE OF PART OF
DETECTED RAIL EQUAL
TO OR MORE THAN
THRESHOLD?

NO

YES

S1604
SELECT GRADIENT OF
LUMINANCE VALUES IN
HORIZONTAL AXIS DIRECTION AS
FEATURE

S1605
SELECT GRADIENT OF
LUMINANCE VALUES IN VERTICAL
AXIS DIRECTION AS FEATURE

S1602
SELECT LUMINANCE VALUE AS
FEATURE

RETURN

EP 3 705 370 A1

# FIG.17

CAMERA 10

DISPLAY UNIT 15

## RAILWAY TRACK DISCRIMINATION DEVICE 20a

IMAGE ACQUISITION UNIT 401

IMAGE CONVERSION UNIT 402

FEATURE SELECTION UNIT 403a

FEATURE DATA EXTRACTION UNIT 404

RAILWAY TRACK DETECTION UNIT 405

TRAVELING DIRECTION ACQUISITION UNIT 415

INSPECTION REGION DEFINING UNIT 406

REMARKABLE OBJECT MONITORING UNIT 407

OUTPUT CONTROL UNIT 408

STORAGE UNIT 409

DETECTED RAILWAY TRACK INFORMATION 410

REMARKABLE OBJECT INFORMATION 411

RAILWAY TRACK WIDTH INFORMATION 412

INITIAL AREA INFORMATION 413

RAILWAY TRACK POSITION INFORMATION 414

GYRO SENSOR 16

# FIG.18

START OF SELECTION OF
FEATURE IN NEXT AREA

S1801
IS AVERAGE
LUMINANCE VALUE
OF PART OF DETECTED
RAIL EQUAL TO
OR MORE THAN
THRESHOLD?

NO

YES

S1803
IS
RAILROAD
VEHICLE TURNING
AND POSITION IN
CURRENTLY PROCESSED
IN VERTICAL AXIS
DIRECTION EQUAL TO
OR HIGHER THAN
PREDETERMINED
HEIGHT?

NO

YES

S1802
SELECT LUMINANCE VALUE AS
FEATURE

S1804
SELECT GRADIENT OF
LUMINANCE VALUES IN VERTICAL
AXIS DIRECTION AS FEATURE

S1805
SELECT GRADIENT OF
LUMINANCE VALUES IN
HORIZONTAL AXIS DIRECTION AS
FEATURE

RETURN

# FIG.19

CAMERA `10`

DISPLAY UNIT `15`

RAILWAY TRACK DISCRIMINATION DEVICE `20b`

IMAGE ACQUISITION UNIT `401`

IMAGE CONVERSION UNIT `402`

FEATURE SELECTION UNIT `403b`

FEATURE DATA EXTRACTION UNIT `404`

RAILWAY TRACK DETECTION UNIT `405`

POSITION ACQUISITION UNIT `416`

INSPECTION REGION DEFINING UNIT `406`

REMARKABLE OBJECT MONITORING UNIT `407`

OUTPUT CONTROL UNIT `408`

STORAGE UNIT `409`

DETECTED RAILWAY TRACK INFORMATION `410`

REMARKABLE OBJECT INFORMATION `411`

RAILWAY TRACK WIDTH INFORMATION `412`

INITIAL AREA INFORMATION `413`

RAILWAY TRACK POSITION INFORMATION `414`

OPERATION INFORMATION `417`

TACHOGENERATOR `17`

# FIG.20

```
     ┌─────────────────────────┐
     │   START OF SELECTION OF  │
     │  FEATURE IN INITIAL AREA │
     └─────────────────────────┘
                  │
                  ▼
              ◇ IS
          AVERAGE
          LUMINANCE            S2001
        VALUE OF PART OF
        RAIL DETECTED
     FROM INITIAL AREA BEFORE
  ONE FRAME EQUAL TO OR MORE        NO
     THAN THRESHOLD AND IS
       CURRENT POSITION OF
        RAILROAD VEHICLE
          AT LOCATION
          OTHER THAN
           TUNNEL? ◇
```

YES  S2002

| SELECT LUMINANCE VALUE AS FEATURE |

S2003

| SELECT GRADIENT OF LUMINANCE VALUES IN HORIZONTAL AXIS DIRECTION AS FEATURE |

```
     ┌─────────────────────────┐
     │         RETURN          │
     └─────────────────────────┘
```

# FIG.21

START OF SELECTION OF
FEATURE IN NEXT AREA

S2101

IS AVERAGE
LUMINANCE VALUE
OF PART OF DETECTED
RAIL EQUAL TO OR
MORE THAN THRESHOLD
AND IS CURRENT
POSITION OF RAILROAD
VEHICLE AT LOCATION
OTHER THAN
TUNNEL?

NO

YES

S2103

IS
ANGLE OF PART OF
DETECTED RAIL EQUAL
TO OR MORE THAN
THRESHOLD?

NO

YES

S2102

SELECT LUMINANCE VALUE AS
FEATURE

S2104

SELECT GRADIENT OF LUMINANCE
VALUES IN HORIZONTAL AXIS
DIRECTION AS FEATURE

S2105

SELECT GRADIENT OF LUMINANCE
VALUES IN VERTICAL AXIS
DIRECTION AS FEATURE

RETURN

EP 3 705 370 A1

## INTERNATIONAL SEARCH REPORT

International application No.

PCT/JP2018/040108

### A. CLASSIFICATION OF SUBJECT MATTER

Int.Cl. B61L23/00(2006.01)i, G06T7/00(2017.01)i

According to International Patent Classification (IPC) or to both national classification and IPC

### B. FIELDS SEARCHED

Minimum documentation searched (classification system followed by classification symbols)

Int.Cl. B61L23/00, G06T7/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2016-91506 A (MEIDENSHA CORPORATION) 23 May 2016, paragraphs [0022]-[0201], all drawings (Family: none) | 1-6<br>7 |
| Y | JP 2009-17157 A (OMRON CORP.) 22 January 2009, paragraph [0084] (Family: none) | 7 |
| A | JP 2014-62415 A (MITSUBISHI ELECTRIC CORP.) 10 April 2014, entire text, all drawings (Family: none) | 1-7 |

☐ Further documents are listed in the continuation of Box C. ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 08 January 2019 (08.01.2019) | 22 January 2019 (22.01.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015210388 A